# EUROPEAN PATENT APPLICATION

(11) **EP 4 279 551 A1**
(43) Date of publication of application: **22.11.2023**
(21) Application number: 22739457.4
(22) Date of filing: 13.01.2022
(51) Int. Cl.: C09D 5/44, C25D 13/06, C09D 127/12, C09D 127/18, C09D 179/08, H01B 7/02, C09D 7/20

(54) **ELECTRODEPOSITION FLUID AND METHOD FOR PRODUCING INSULATING COATING FILM**

(30) Priority: 13.01.2021 JP 2021003765
(71) Applicant: Mitsubishi Materials Corporation, Tokyo 100-8117 (JP)
(72) Inventor: IIDA, Shintaro, Amagasaki-shi, Hyogo 660-0856 (JP); YAMASAKI, Kazuhiko, Amagasaki-shi, Hyogo 660-0856 (JP)
(74) Representative: Hoffmann Eitle
(86) International application number: PCT/JP2022/000972
(87) International publication number: WO 2022/154052

(57) **Abstract**

The electrodeposition dispersion of the present invention is an electrodeposition dispersion for electrodepositing an electrodeposited film on a conductive base material, the solution including water, a dispersion medium, and a solid component, in which the solid component includes a polyimide-based resin and a fluorine-based resin, the fluorine-based resin content included in the solid component is in a range of 72 mass% or more and 95 mass% or less, an average particle diameter of the solid component dispersed in the water and the dispersion medium is 50 nm or more and 500 nm or less, and a standard deviation of the particle diameter of the solid component is 250 nm or less.

## Description

### TECHNICAL FIELD

The present invention relates to an electrodeposition dispersion used when producing an electrodeposited film on a conductive base material by electrodeposition, as well as a method for producing an insulating film.

Priority is claimed on Japanese Patent Application No. 2021-003765, filed January 13, 2021, the content of which is incorporated herein by reference.

### BACKGROUND ART

Insulated conductors, in which a conductive base material is coated with an insulating film formed of an insulating resin, are widely used as conductive materials or heat dissipation plate materials for various types of electrical devices that require insulation. As a constituent material of the insulating film, a mixture of a plurality of types of resins is known. For example, insulating films formed of mixtures of polyimide-based resins such as polyamideimide resin and polyimide resin and fluorine-based resins are known. By mixing a plurality of types of resins, it is possible to improve the insulation properties of the insulating film.

The electrodeposition method is known as a method for forming an insulating film formed of such insulating resins on the surface of a conductive base material (for example, refer to Patent Document 1).

The electrodeposition method is a method for forming an electrodeposited film in which the material of the insulating film is deposited on the surface of a base material by immersing the base material forming the insulating film and a counter electrode in an electrodeposition dispersion in which the material of the insulating film is dispersed and applying a voltage between the base material and the counter electrode. The formed electrodeposited film is then heated and the insulating film is formed by baking the electrodeposited film onto the base material.

### [Citation List]

### [Patent Document]

[Patent Document 1]
Japanese Unexamined Patent Application, First Publication No. 2015-156378 (A)

### SUMMARY OF INVENTION

### Technical Problem

However, in a case where an electrodeposited film was formed with an electrodeposition dispersion including a polyimide-based resin and a fluorine-based resin, when the ratio of the fluorine-based resin was increased to improve the insulating property, there was a problem in that fracturing was likely to occur. For this reason, cracks may occur after baking and there is a desire for improvement in this regard.

The present invention was created in consideration of these circumstances and has an object of providing an electrodeposition dispersion for forming an electrodeposited film having excellent insulation properties and a smooth surface having few irregularities on a base material, as well as a method for producing an insulating film using this electrodeposition dispersion.

### Solution to Problem

In order to solve the problem described above, the present inventors considered that, in a case where coarse fluororesin particles are present in an electrodeposition dispersion, the coarse particles inhibit film formation and generate cracks in the coating film and found, as a result of focusing on the solvent ratio when mixing a polyimide-based resin particle dispersion solution and a fluororesin particle dispersion solution, that it is possible to suppress the generation of coarse fluororesin particles by adding a fluororesin particle dispersion solution to a polyimide-based resin dispersion solution in which the concentration of water is more than that of a polyimide-based resin dispersion medium. This is considered to be because the dispersion state of the fluororesin particles is destabilized by a polar solvent and polyimide-based resin particles in the dispersion medium. Therefore, new findings were obtained in that it is possible to suppress the instability of the dispersion state of the fluororesin particles by adding water to the polyimide-based resin particle dispersion solution before mixing, lowering the concentration of the polyimide-based resin particles and the concentration of the polar solvent in the dispersion medium, and then adding the fluororesin particle dispersion solution.

Based on these findings, this invention proposes the following means.

That is, the electrodeposition dispersion of the present invention includes water, a dispersion medium, and a solid component, in which the solid component includes a polyimide-based resin and a fluorine-based resin, the fluorine-based resin content included in the solid component is in a range of 72 mass% or more and 95 mass% or less, an average particle diameter of the solid component dispersed in the water and the dispersion medium is 50 nm or more and 500 nm or less and a standard deviation of the particle diameter of the solid component is 250 nm or less.

According to the present invention, by using an electrodeposition dispersion in which the fluorine-based resin content included in a solid component dispersed in water and a dispersion medium is in a range of 72 mass% or more and 95 mass% or less, the average particle diameter of the solid component dispersed in the water and the dispersion medium is 50 nm or more and 500 nm or less, and the standard deviation of the particle diameter of the solid component is 250 nm or less, even if the content of the fluorine-based resin that improves the insulation properties is high, it is possible to suppress the generation of giant clusters of fluororesin particles by increasing the content of water with respect to the dispersion medium as well as to form an insulating film provided with high-level insulation properties and having a smooth surface free of cracks.

In addition, in the present invention, the polyimide-based resin may be polyamideimide.

In addition, in the present invention, the fluorine-based resin may be polytetrafluoroethylene.

In addition, in the present invention, the dispersion medium may be N-methyl-2-pyrrolidone.

A method for producing an insulating film of the present invention uses the electrodeposition dispersion according to any one of the above aspects and includes an electrodeposition step of immersing the base material and a counter electrode in the electrodeposition dispersion, setting the base material as an anode and the counter electrode as a cathode, applying a voltage between the anode and the cathode, and forming an electrodeposited film on the base material.

In addition, in the present invention, a temperature of the electrodeposition dispersion in the electrodeposition step may be 5°C or more and 35°C or less and the applied voltage between the anode and the cathode may be 10 V or more and 600 V or less.

### Advantageous Effects of Invention

According to the present invention, it is possible to provide an electrodeposition dispersion for forming an electrodeposited film having excellent insulation properties and a smooth surface having few irregularities on a base material, as well as a method for producing an insulating film using this electrodeposition dispersion.

### BRIEF DESCRIPTION OF DRAWINGS

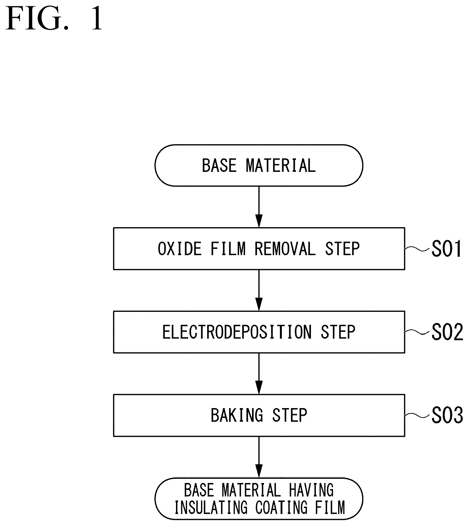

FIG. 1 is a flowchart showing, in a step-by-step manner, a method for producing an insulating film according to an embodiment of the present invention.

### DESCRIPTION OF EMBODIMENTS

A detailed description will be given below of an embodiment of the present invention, while referring to the drawing as appropriate. In the drawing used in the following description, the characteristic parts may be enlarged for convenience in order to make the characteristics of the present invention easier to understand, and the dimensional ratios and the like of each of the constituent components may differ from those in practice. The materials, dimensions, and the like exemplified in the following description are examples and the present invention is not limited thereto, but is able to be implemented with modifications as appropriate within a range in which the effects are achieved.

FIG. 1 is a flowchart showing, in a step-by-step manner, a method for producing an insulating film according to an embodiment of the present invention.

The method for producing an insulating film of an embodiment of the present invention has an oxide film removal step S1, an electrodeposition step S2, and a baking step S3.

As the base material used in the method for producing the insulating film of the present embodiment, a conductive metal material, for example, pure copper, a metal material including copper, pure aluminum, or a metal material including aluminum is used. In the present embodiment, 4N copper (99.99% purity) is used as the base material.

### (Oxide Film Removal Step S1)

First, an aqueous solution of an oxide film remover such as an organic solvent or surfactant is used to remove oil, fat, and oxide films attached to the surface of the base material (oxide film removal step S1). For example, in the present embodiment, without being limited thereto, oil, fat, and oxide films attached to the surface of the base material are dissolved and removed by immersing the base material for 0.5 minutes or more and 5 minutes or less, preferably 1 minute, in an aqueous solution of an oxide film remover which includes an oxide film remover (Hi-Clean C-100, produced by Shimizu Corporation or the like) having a liquid temperature of 10°C or more and 40°C or less, preferably approximately 20°C in an amount of 2 mass% or more and 20 mass% or less, preferably 5 mass%.

### (Electrodeposition Step S2)

Next, a coating film (electrodeposited film) formed of a mixture of a polyimide-based resin and a fluorine-based resin is formed by electrodeposition on the surface of the base material by an anionic electrodeposition method (electrodeposition step S2).

The electrodeposition dispersion of an embodiment of the present invention used in this electrodeposition step S2 has water, a dispersion medium, and a solid component dispersed in the water and dispersion medium. The content of the solid component in the electrodeposition dispersion is not limited, but is preferably 1 mass% or more and 20 mass% or less. As the solid components of the electrodeposition dispersion, a polyimide-based resin and a fluorine-based resin are used. More specifically, in the present embodiment, as the solid components, polyamideimide resin is used as the polyimide-based resin and polytetrafluoroethylene is used as the fluorine-based resin. The fluorine-based resin content included in the solid components is in a range of 72 mass% or more and 95 mass% or less.

When the content of the fluorine-based resin included in the solid component is less than 72 mass%, it is not possible to reduce the relative permittivity of the insulating film formed through the baking step to a sufficiently low value (for example, less than 3.0). On the other hand, when the content exceeds 95 mass%, the insulating film does not become a continuous film and cracks are likely to be generated.

The average particle diameter of the solid component dispersed in water and dispersion medium may be 50 nm or more and 500 nm or less, more preferably 50 nm or more and 450 nm or less, and even more preferably 50 nm or more and 300 nm or less. In addition, the standard deviation of the particle diameter of the solid component may be 250 nm or less, more preferably 150 nm or less, and even more preferably 100 nm or less. It is possible to calculate the average particle diameter and standard deviation of the solid component from the particle size distribution measured in the solid component. It is possible to measure the particle size distribution using, for example, laser diffraction and scattering, dynamic light scattering, centrifugal sedimentation, and the like.

The dispersion medium preferably includes a polar solvent and a base. In addition, the polar solvent preferably has a more boiling point than water. Examples of polar solvents include organic solvents such as N-methyl-2-pyrrolidone, 1,3-dimethyl-2-imidazolidinone, dimethyl sulfoxide, and N,N dimethylacetamide. In the present embodiment, N-methyl-2-pyrrolidone may be used as a polar solvent.

Furthermore, examples of bases in the dispersion medium include tri-n-propylamine, dibutylamine, piperidine, triethylamine, and the like. The content ratio of water in the electrodeposition dispersion is preferably 15 mass% to 40 mass% and even more preferably 18 mass% to 30 mass%. In addition, the content ratio of the polar solvent in the electrodeposition dispersion is preferably 60 mass% to 90 mass% and the content ratio of the base is preferably 0.1 mass% to 0.3 mass%.

A description will be given below of production examples of the electrodeposition dispersion.

First, a polar solvent, an isocyanate component, and an acid component are mixed in a flask provided with a stirrer, a cooling tube, a nitrogen inlet tube, and a thermometer and the temperature is raised to, for example, 80°C to 130°C and held for 2 to 8 hours to carry out a reaction to obtain polyamideimide.

Here, examples of isocyanate components include aromatic diisocyanates such as diphenylmethane-4,4'-diisocyanate (MDI), diphenylmethane-3,3'-diisocyanate, diphenylmethane-3,4'-diisocyanate, diphenyl ether-4,4'-diisocyanate, benzophenone-4,4'-diisocyanate, diphenyl sulfone-4,4'-diisocyanate, and the like.

In addition, examples of acid components include trimellitic anhydride (TMA), 1,2,5-trimellitic acid (1,2,5-ETM), biphenyl tetracarboxylic acid dianhydride, benzophenone tetracarboxylic acid dianhydride, diphenyl sulfone tetracarboxylic acid dianhydride, oxydiphthalic dianhydride (OPDA), pyromellitic dianhydride (PMDA), 4,4'-(2,2'-hexafluoroisopropylidene)diphthalic dianhydride, and the like.

Thereafter, the synthesized polyamideimide is diluted with a polar solvent to prepare a polyamideimide varnish.

The polyamideimide varnish is further diluted with a polar solvent, for example, N-methyl-2-pyrrolidone, tri-n-propylamine (TPA), which is a basic compound, is added, and then water is further added to form a polyamideimide dispersion solution.

Meanwhile, polytetrafluoroethylene is dispersed in water with an emulsifier to obtain a polytetrafluoroethylene dispersion solution.

It is possible to produce the electrodeposition dispersion of the present embodiment by diluting the polyamideimide dispersion solution with water together with the basic compound (TPA), then mixing with the polytetrafluoroethylene dispersion solution and carrying out further dilution with N-methyl-2-pyrrolidone.

Using the electrodeposition dispersion obtained in this manner, an electrodeposited film in which polyamideimide and polytetrafluoroethylene are mixed is anionically electrodeposited on the surface of a conductive base material. It is possible to perform the anionic electrodeposition of the electrodeposited film by immersing the conductive base material and the counter electrode in the electrodeposition dispersion of the present embodiment and applying a DC voltage with the base material as the anode and the counter electrode as the cathode.

The temperature of the electrodeposition dispersion (liquid temperature) in the electrodeposition step S2 is adjusted to, for example, a range of 5°C or more and 35°C or less. When the liquid temperature is less than 5°C, water is mixed into the liquid due to the generation of condensation or the like and, when the liquid temperature exceeds 35°C, there is a possibility that the storage stability of the liquid may be adversely affected.

The applied voltage between the base material (anode) and the counter electrode (cathode) in the electrodeposition step S2 is set to 10 V or more and 600 V or less. When the applied voltage is less than 10 V, the electrodeposition speed is slow and there is a concern that productivity may decrease. In addition, when the applied voltage exceeds 600 V, many bubbles are generated on the surface of the base material and these bubbles may pop in the subsequent baking step S3, causing numerous irregularities in the insulating film.

### (Baking Step S3)

In the baking step S3, a base material, on which an electrodeposited film including polyamideimide and polytetrafluoroethylene, which are solid components obtained in the electrodeposition step S2, is formed, is dried in a temperature range of, for example, 200°C or more and the melting point of the solid component or less to remove residual electrodeposition dispersion, and then the electrodeposited film including polyamideimide and polytetrafluoroethylene is baked onto the base material to form an insulating film.

The baking temperature in the baking step S3 may be in the temperature range at which the electrodeposited film of polyamideimide and polytetrafluoroethylene hardens to form an insulating film on the base material, for example, in a range of 200°C or more and 450°C or less. In addition, the baking time may be, for example, in a range of 1 minute or more and 60 minutes or less.

Through the above steps, it is possible to form an insulating film including a mixed resin of polyamideimide, which is a polyimide-based resin, and polytetrafluoroethylene, which is a fluorine-based resin, on the conductive base material. Due to this, it is possible to obtain an insulating film with good insulation properties (for example, a relative permittivity of less than 3.0) and excellent smoothness free of cracks. The presence or absence of cracks may be visually determined, but it is preferable to precisely determine the presence or absence of cracks using, for example, a digital microscope or the like. In the case of precise determination, for example, a case of zero cracks having a size (length) of 200 µm or more may be determined as "no cracks (good)" and a case of one or more cracks may be determined as "cracks present".

An embodiment of the present invention was described above; however, this embodiment is presented as an example and is not intended to limit the scope of the invention. It is possible to implement this embodiment in various other forms and to make various omissions, substitutions, and modifications in a range not departing from the gist of the invention. This embodiment and variations thereof are included within the invention described the scope of the claims and equivalents thereof as well as being included within the scope and the gist of the invention.

### EXAMPLES

### "Specific Production Examples of Electrodeposition Dispersion"

### (1) Synthesis of Polyimide-based Resin Varnish

First, 747 g of N-methyl-2-pyrrolidone as the organic solvent, 298 g (1.19 mol) of 4,4'-diphenylmethane diisocyanate as the isocyanate component, and 227 g (1.18 mol) of anhydrous trimellitic acid as the acid component were introduced into a 2-liter fouropening flask provided with a stirrer, cooling tube, nitrogen inlet tube, and a thermometer and the temperature was raised to 130°C. By reacting at this temperature for approximately 4 hours, a polymer (polyamideimide resin) having a number average molecular weight of 17,000 was obtained. A polyamideimide varnish (polyamideimide resin/N-methyl-2-pyrrolidone = 20 mass%/80 mass%) was obtained in which the synthesized polyamideimide resin was diluted using N-methyl-2-pyrrolidone as an organic solvent to a concentration of 20 mass% of polyamideimide resin (non-volatile content).

### (2) Preparation of Polyimide-based Resin Particle Dispersion Solution

Next, 62.5 g of the obtained polyamideimide varnish was further diluted with 140 g of N-methyl-2-pyrrolidone, 0.5 g of tri-n-propylamine, which is a basic compound, was added, and then 47 g of water was added at room temperature (25°C) while stirring this liquid at a high rotation speed of 10,000 rpm. Due to this, 250 g of a polyamideimide dispersion solution having a median diameter of 250 nm was obtained (polyamideimide particles/N-methyl-2-pyrrolidone/water/tri-n-propylamine = 5 mass%/75.8 mass%/19 mass%/0.2 mass%).

### (3) Preparation of Fluororesin Particle Dispersion Solution

A commercially available polytetrafluoroethylene particle dispersion solution (Polyflon PTFE D210C, produced by Daikin Industries, Ltd.) was diluted with water to obtain a polytetrafluoroethylene dispersion solution (average particle diameter 280 nm, PTFE/water = 50 mass%/50 mass%).

### (4) Preparation of Electrodeposition Dispersion

After diluting 2020 g of the polyamideimide dispersion solution in (2) with 3.6727 g of TPA and 1244 g of water, 792 g of the polytetrafluoroethylene dispersion solution in (3) was mixed therein and further diluted with NMP to obtain the electrodeposition dispersion (polyamideimide particles/polytetrafluoroethylene particles/N-methyl-2-pyrrolidone/water/tri-n-propylamine = 3.6 mass%/0.9 mass%/77.3 mass%/18 mass%/0.3 mass%).

### "Specific Production Examples of Insulating Film"

Using the electrodeposition dispersion described above, the electrodeposition dispersion was stored in an electrodeposition tank and the temperature of the electrodeposition dispersion in the tank was set to 20°C. Next, a copper wire 1 mm in diameter and 300 mm in length was used as the anode and a cylindrical type copper sheet inserted into the electrodeposition dispersion in the electrodeposition tank was used as the cathode and the copper sheet was held in the electrodeposition dispersion in the electrodeposition tank for 30 seconds in a state where a DC voltage of 500 V was applied between the copper wire and the cylindrical type copper sheet (electrodeposition step). Due to this, an electrodeposited film was formed on the surface of the copper wire. Next, the copper wire on which the electrodeposited film was formed was placed in a drying oven at 300°C for 5 minutes, a drying process was performed, and the electrodeposited film was baked to obtain a copper wire on which an insulating film was formed (baking step).

Next, the effects of the present invention were verified.

Based on the specific production examples of the insulating films described above, electrodeposition dispersions of Examples 1 to 4 and Comparative Examples 1 to 3 were each formed to form insulating films on a base material formed of copper.

In Example 1, the mixing ratio (mass%) of polyamideimide to polytetrafluoroethylene, which were the solid components, was 72:28. In addition, dilution was carried out with water at 4 times the mass of the solid components.

In Example 2, the mixing ratio (mass%) of polyamideimide to polytetrafluoroethylene, which were the solid components, was 75:25. In addition, dilution was carried out with water at 4 times the mass of the solid components.

In Example 3, the mixing ratio (mass%) of polyamideimide to polytetrafluoroethylene, which were the solid components, was 80:20. In addition, dilution was carried out with water at 4 times the mass of the solid components.

In Example 4, the mixing ratio (mass%) of polyamideimide to polytetrafluoroethylene, which were the solid components, was 95:5. In addition, dilution was carried out with water at 4 times the mass of the solid components.

Comparative Example 1 is similar to Example 3 except for not being diluted with water.

In Comparative Example 2, the mixing ratio (mass%) of polyamideimide to polytetrafluoroethylene, which were the solid components, was 60:40. In addition, dilution was carried out with water at 4 times the mass of the solid components.

In Comparative Example 3, the mixing ratio (mass%) of polyamideimide to polytetrafluoroethylene, which were the solid components, was 99:1. In addition, dilution was carried out with water at 4 times the mass of the solid components.

The average particle diameter of the solid components and the standard deviation of the solid components in the electrodeposition dispersions of Examples 1 to 4 and Comparative Examples 1 to 3 were measured. A particle size distribution meter (LB550: produced by Horiba, Ltd.) was used for the measurement.

Then, an electrodeposited film was formed using each electrodeposition dispersion and baking was performed to form an insulating film on the base material. The external appearance state (presence or absence of cracks) and relative permittivity of the formed insulating films were observed and measured. The external appearance state was visually observed. A film with zero cracks was "good". In addition, the relative permittivity was measured using an LCR meter (produced by Hioki Electric Co., Ltd.).

The results of these verifications are shown in Table 1.

**[Table 1]**

| | PTFE/PAI | Water dilution amount | Average diameter (nm) | Standard deviation (nm) | Coating film external appearance | Relative permittivity |
|---|---|---|---|---|---|---|
| Example 1 | 72/28 | Four times | 489.9 | 236.4 | Good | 2.9 |
| Example 2 | 75/25 | Four times | 450.9 | 100.0 | Good | 2.8 |
| Example 3 | 80/20 | Four times | 425.7 | 83.6 | Good | 2.6 |
| Example 4 | 95/5 | Four times | 272.1 | 62.4 | Good | 2.2 |
| Comparative Example 1 | 80/20 | No water dilution | 1849.5 | 2908.3 | Cracks | 2.6 |
| Comparative Example 2 | 60/40 | Four times | 480.0 | 270.0 | Good | 3.4 |
| Comparative Example 3 | 99/1 | Four times | 261.6 | 87.9 | Cracks | 2.1 |

According to the results shown in Table 1, in Examples 1 to 4, the content of polytetrafluoroethylene (fluorine-based resin) included in the solid component was set to a range of 72 mass% or more and 95 mass% or less and dilution was carried out with water at 4 times the mass of the solid component such that the average particle diameter of the solid component dispersed in the water and dispersion medium was 50 nm or more and 500 nm or less and the standard deviation of the particle diameter of the solid component was 250 nm or less, thus, it was possible to suppress the generation of cracking due to coarsening of the fluorine-based resin particles and to form an insulating film with excellent insulation properties having a relative permittivity of less than 3.0.

On the other hand, in Comparative Example 1, since dilution with water was not performed, coarse fluororesin particles were generated and cracks were generated in the insulating film. In Comparative Example 2, since the content of polytetrafluoroethylene (fluorine-based resin) included in the solid component was as low as 60 mass%, the relative permittivity was high at 3.4 and the insulation properties of the insulating film formed were low. In addition, in Comparative Example 3, since the content of polytetrafluoroethylene (fluorine-based resin) included in the solid component was excessively high at 99 mass%, coarse fluororesin particles were generated and cracks were generated in the insulating film.

Based on these results, it was confirmed that, by setting the content of polytetrafluoroethylene (fluorine-based resin) included in the solid component in a range of 72 mass% or more and 95 mass% or less, the average particle diameter of the solid component dispersed in water and dispersion medium to 50 nm or more and 500 nm or less, and the standard deviation of the particle diameter of the solid component to 250 nm or less, an insulating film provided with high insulation properties and having a smooth surface free of cracks was obtained.

## Claims

1. An electrodeposition dispersion for electrodepositing an electrodeposited film on a conductive base material, the electrodeposition dispersion comprising:
water;
a dispersion medium; and
a solid component,
wherein the solid component includes a polyimide-based resin and a fluorine-based resin,
the fluorine-based resin content included in the solid component is in a range of 72 mass% or more and 95 mass% or less,
an average particle diameter of the solid component dispersed in the water and the dispersion medium is 50 nm or more and 500 nm or less, and
a standard deviation of the particle diameter of the solid component is 250 nm or less.

2. The electrodeposition dispersion according to claim 1,
wherein the polyimide-based resin is polyamideimide.

3. The electrodeposition dispersion according to claim 1 or 2,
wherein the fluorine-based resin is polytetrafluoroethylene.

4. The electrodeposition dispersion according to any one of claims 1 to 3,
wherein the dispersion medium is N-methyl-2-pyrrolidone.

5. A method for producing an insulating film using the electrodeposition dispersion according to any one of claims 1 to 4, the method comprising:
an electrodeposition step of immersing the base material and a counter electrode in the electrodeposition dispersion, setting the base material as an anode and the counter electrode as a cathode, applying a voltage between the anode and the cathode, and forming an electrodeposited film on the base material.

6. The method for producing an insulating film according to claim 5,
wherein a temperature of the electrodeposition dispersion in the electrodeposition step is 5°C or more and 35°C or less, and
the applied voltage between the anode and the cathode is 10 V or more and 600 V or less.
